# EUROPEAN PATENT APPLICATION

(11) **EP 2 046 064 A1**
(43) Date of publication of application: **08.04.2009**
(21) Application number: 06811323.2
(22) Date of filing: 05.10.2006
(51) Int. Cl.: H04N 9/04

(54) **LIGHT EMITTING DISPLAY DEVICE**

(71) Applicant: Panasonic Corporation, Kadoma-shi Osaka 571-8501 (JP)
(72) Inventor: MATSUYAMA, Makoto c/o Matsushita Electric Industrial Co., Ltd., Chuo-Ku Osaka 540-6207 (JP); MATSUO, Hideaki c/o Matsushita Electric Industrial Co., Ltd., Chuo-Ku Osaka 540-6207 (JP); KAWABATA, Akihiro c/o Matsushita Electric Industrial Co., Ltd., Chuo-Ku Osaka 540-6207 (JP)
(74) Representative: Grünecker, Kinkeldey, Stockmair & Schwanhäusser Anwaltssozietät
(86) International application number: PCT/JP2006/319996
(87) International publication number: WO 2008/044270

(57) **Abstract**

It is possible for a user to perceive an atmosphere of an image in response to a luminescent pattern of light emitting diodes. An attention area containing a predetermined image pattern is extracted by an attention area analyzing section 12 from an image picked up by a capturing section 11, a color distribution is calculated by a color distribution calculating section 13 based on numerical values of respective images in the extracted attention area, a representative color is selected from the calculated color distribution by a representative color selecting section, and light emitting diodes 16 are turned on in a pattern corresponding to the selected representative color.

## Description

### Technical Field

The present invention relates to a luminescent display device for controlling light emitting diodes to emit a light in a luminescent pattern in response to a feature of an image, in shooting (capturing) a subject or in looking at an image of the subject.

### Background Art

Nowadays a digital camera that converts the picked-up image into electric signals by the semiconductor device such as CCD, or the like, which reacts to a light, and then stores the signal in the flash memory as digital data is used widely. Also, as a mobile communication terminal such as a cellular phone, a PHS phone, or the like, the terminal having a digital camera function is spreading.

Meanwhile, as the mobile communication terminal, there is the terminal having the luminescent display device that causes a user to perceive intuitively operating conditions of various functions such as phone call, and the like by turning on or flashing the light emitting diodes. In such luminescent display device, operating conditions of plural functions including a call receiving function can be displayed distinguishably in different luminous colors by arranging adequately the light emitting diodes of three colors R (red), G (green), B (blue) on the substrate, and selecting mixing ratios of three luminous colors (see Patent Literature 1, for example).

Also, the cellular phone with camera capable of notifying the user or the subject of the operating conditions by displaying warning on the use of a flashlight in shooting with a camera, antenna condition (receiving sensitivity), remaining battery life, remaining time up to the shooting (shutter switch ON) in a self-timer mode, and the like on the submonitor, and the like have been proposed (see Patent Literature 2, for example).
Patent Literature 1: JP-A-2003-195791
Patent Literature 2: JP-A-2003-333382

### Disclosure of the Invention

### Problems that the Invention is to Solve

However, according to the mobile communication terminal having a digital camera function set forth in Patent Literature 1 and Patent Literature 2, the lighting or blinking of the light emitting diodes can informs the user that a phone call has come in or can call the user's attention to an operation of the camera at a time of shooting, and the like, nevertheless a luminescent pattern of the light emitting diodes can never inform the user of a feature and a nature of the image, i.e., an atmosphere of the image, in shooting or looking at the image.

For example, when the user sets the image of a red flower in a flower garden at the center of the shooting subject, such user cannot perceive that red is the dominant color in the image that the camera as a capturing section is going to take.

The present invention has been made in view of the above circumstances, and it is an object of the present invention to provide a luminescent display device that permits a user to perceive a feature and an atmosphere of an image at a glance from a luminescent pattern of a plurality of light emitting diodes because the light emitting diodes are caused to emit a light in the luminescent pattern responding to a color distribution of the image of a subject in shooting or a picked-up image of the subject.

### Means for Solving the Problems

In order to attain the above object, a luminescent display device of the present invention includes:
a capturing section which captures an image of a subject;
an attention area analyzing section which extracts an attention area containing a predetermined image pattern from the image captured by the capturing section;
a color distribution calculating section which calculates a color distribution based on color information of respective pixels in the attention area extracted by the attention area analyzing section;
a representative color selecting section which selects a representative color from the color distribution calculated by the color distribution calculating section; and
a light emission control section which controls a light emitting diode to emit a light in the representative color selected by the representative color selecting section.

According to this configuration, the attention area analyzing section extracts automatically the attention area in capturing the subject or in looking at the image via the viewer, the representative color is selected from the color distribution of the image in the extracted attention area, and the light emitting diode is emits a light so as to be displayed in the predetermined luminescent pattern corresponding to the representative color. Therefore, the luminescent pattern can cause the cameraman to perceive intuitively the atmosphere containing the attention area on the image of the subject.

Also, the luminescent display device according to the present invention further includes a luminescent pattern determine section which determines a luminescent pattern of the light emitting diode. The light emission control section controls the light emitting diode to emit a light in the representative color selected by the representative color selecting section at a timing that is based upon the luminescent pattern determined by the luminescent pattern determine section.

According to this configuration, the user can be caused to perceive the atmosphere of the image by a light emitting time corresponding to the representative color, the luminescent pattern such as blinking, or the like.

In the luminescent display device of the present invention, the luminescent pattern determine section determines the luminescent pattern in response to the representative color selected by the representative color selecting section.

According to this configuration, the light emitting diode can be caused to emit a light in the luminescent pattern corresponding to the representative color.

Also, the luminescent display device of the present invention, when a plurality of areas as a candidate of the attention area are detected from the image, the attention area analyzing section extracts any one of the plurality of areas as the attention area.

According to this configuration, when plural candidates of the attention area are detected, the user can be caused to perceive adequately the atmosphere of the image by specifying one attention area, and then determining the luminescent pattern of the light emitting diode based on the representative color of this specified attention area.

Also, the luminescent display device of the present invention, the color distribution calculating section calculates the color distribution based on a numerical value representing the color information of each pixel in the attention area extracted by the attention area analyzing section and a weighting factor being set every color information.

According to this configuration, a degree of people's attention to the color can be added by weighting the color distribution. As a result, the user can be caused to perceive intuitively the feature (atmosphere) of the image by controlling the luminescent pattern of the light emitting diode.

### Advantages of the Invention

According to the present invention, such advantages can be achieved that the light emitting diodes of respective colors can be caused to emit a light in the luminescent pattern corresponding to the representative colors that are determined in response to a color distribution of the image, an area ratio of respective color areas, or the like in shooting the subject or in looking at the image, and then the user can be caused to perceive intuitively the atmosphere of the image, in which the green is dominant in the subject such as a mountain, a green field, or the like, for example, by the luminescent pattern of the light emitting diodes.

### Brief Description of the Drawings

[FIG.1] A block diagram showing a luminescent display device according to a first embodiment of the present invention.
[FIG.2] A flowchart showing procedures of extracting an attention area from an image in the present invention.
[FIG.3] A flowchart showing procedures of controlling a light emission of light emitting diodes in the present invention.
[FIG.4] A color distribution view showing a color distribution state that the attention area of the image has in the present invention.
[FIG.5] A color distribution view showing a color distribution state that the attention area of another image has in the present invention.
[FIG.6] A block diagram showing a luminescent display device according to a second embodiment of the present invention.
[FIG.7] A flowchart showing extracting procedures when a plurality of areas serving as a candidate of the attention area are present in the image in the present invention.

### Description of Reference Numerals

- 10: luminescent display device
- 11: capturing section
- 12: attention area analyzing section
- 13: color distribution analyzing section
- 14: luminescent pattern determine section
- 15: light emission control section
- 16: light emitting diode

### Best Mode for Carrying Out the Invention

Embodiments of the present invention will be explained with reference to the drawings hereinafter. First, an overall configuration of a luminescent display device of the present invention will be explained hereunder.
The luminescent display device according to the embodiments of the present invention is constructed such that an attention area of an image is extracted in shooting or looking at the image, or the like, a representative color is selected from color distribution information of the resultant attention area, and light emitting diodes are caused to emit a light in a predetermined luminescent pattern corresponding to the selected representative color.

As a result, the cameraman can perceive an atmosphere on the image immediately by identifying a lighting condition of the light emitting diodes.
The embodiments of the present invention will be explained in further detail hereunder.

### (First Embodiment)

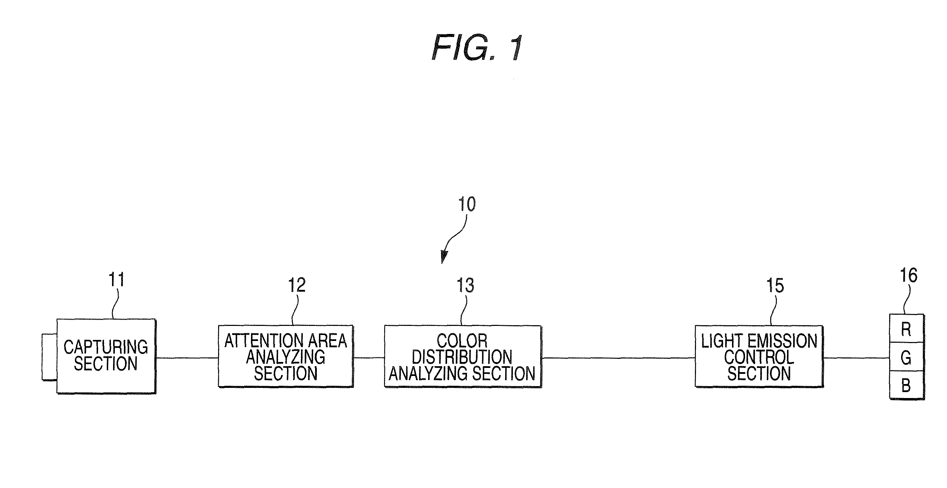

FIG.1 is a block diagram showing a luminescent display device according to a first embodiment of the present invention. A luminescent display device 10 includes a capturing section 11, an attention area analyzing section 12, a color distribution analyzing section 13, a light emission control section 15, and light emitting diodes (LEDs) 16.

Out of them, the capturing section 11 has at least a function of converting an image picked up from the subject into electrical signals and recording the signals in a flash memory, or the like, a function of displaying the picked-up image read from the flash memory, or the like on a monitor in response to the user's operation to look at the image, and the like. In addition, the capturing section 11 has a diaphragm, a shutter screen, a viewfinder, etc., but their illustration and explanation will be omitted herein because these elements are not the feature portions of the present invention.

The attention area analyzing section 12 functions to extract an area of a predetermined image pattern as the attention area from the image of the subject to be taken or the image read from the flash memory, or the like. This "area of a predetermined image pattern" section an area of the image, which is assumed commonly to get people's attention. The attention area analyzing section 12 extracts automatically this area.

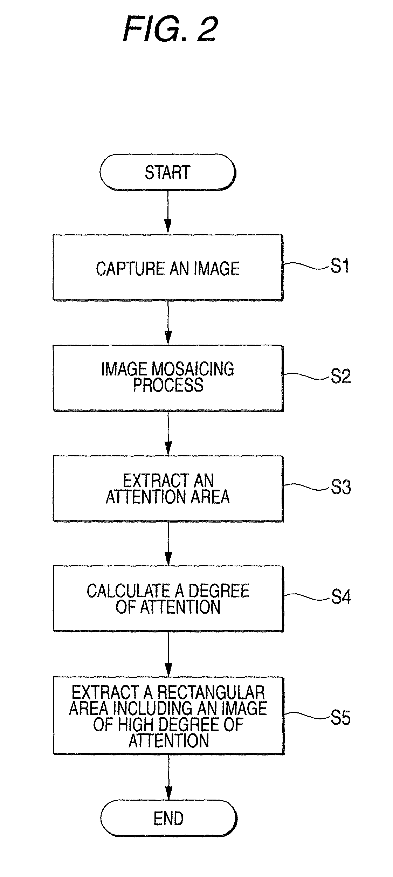

In order to decide the area that gets people's attention (attention area), a method shown in FIG.2, for example, is employed. According to this method, the image to be picked up or the image to be looked at is captured into the processing unit (not shown) such as the microprocessor, or the like as an original image (step S1). Then, a mosaicing process (process of shading off the area containing no color change to highlight clearly the portion that is less shaded off) is applied to the original image captured into the processing unit to get a mosaic image (step S2). Then, the attention area that gets people's attention is extracted (step S3).

In this extraction of the attention area, (a) the method of extracting an edge of the image, (b) the method of extracting a feature based on color identification, and (c) the method of extracting a feature of a center portion of the image by a masking process are carried out in combination. In the edge extracting method out of them, the feature of the image is extracted from both viewpoints of the local feature and the broad feature by converting the image into a plurality of resolutions and then using edge information every resolution.

In contrast, in the feature extracting method based on the color identification, when a numerical value representing a color of pixels constituting a certain image (in the case of monochrome image, a numerical value of 0 to 255 the larger value of which represents the darker color. In addition, there area the RGB value, the CMYK value, and the like) is larger (or smaller) than an average value of the numerical values over all pixels, the pixel is recognized as the feature location and this location is extracted.

Also, in the feature extracting method of the center portion of the image by a masking process, the feature of the center portion of the image is extracted by the masking process. This method is based upon the assumption that normally a degree of attention becomes higher toward the center of the image and a degree of attention becomes lower toward the edge of the image.

Then, a degree of attention of the image in the extracted attention area is calculated by the arithmetic operation including a size of the masking process, a weighting to the result of the mosaic image analysis, and the like (step S4). Finally, a rectangular area surrounding the overall image whose calculated degree of attention is in excess of a threshold value is extracted (step S5).

Then, the color distribution analyzing section 13 analyzes a color distribution in the extracted attention area. In this color distribution analysis, one color or plural colors of the widest area are decided as a representative color in order of wider occupation area in the attention area in plural color. The color distribution analyzing section 13 has a representative color selecting function (representative color selecting section) of selecting a representative color from the analyzed color distribution.

The light emission control section 15 functions to cause the light emitting diodes 16 to emit a light in representative color selected by the color distribution analyzing section 13. The light emission of the light emitting diodes 16 in representative color can cause the user of the camera or the cellular phone with camera to perceive intuitively an atmosphere of the image in shooting the subject or in looking at the image, i.e., what kind of image.

As described above, as the case where the light emitting diodes 16 emit a light respectively to notify the user of an atmosphere of the image, there may be considered the case where a thumbnail image is viewed by a viewer, the case where a focus is adjusted in shooting, the case where a static image or a moving image arrives at via an e-mail, the case where a phone call arrives at from the person registered in a phone book of a cellular phone, the case where a standby image is being displayed, the case where a color obtained after the image is edited agrees with a color that the user aims at, and others.

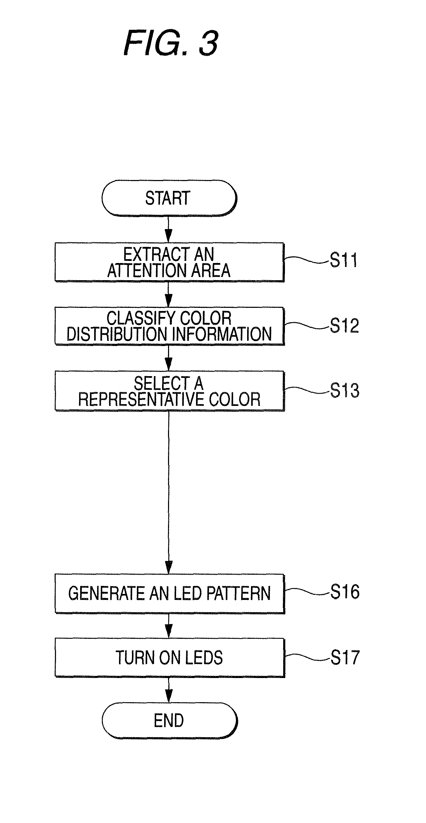

Next, an operation of the luminescent display device according to the first embodiment will be explained with reference to a flowchart shown in FIG.3 hereunder.

First, when the user takes an image of the subject by the capturing section 11, this image of the subject is converted into electrical signals and recorded in the flash memory, or the like. This recorded image can be read from the flash memory in response to the user's operation, the arrival of the e-mail or the arrival of the phone call, or the like and can be viewed.

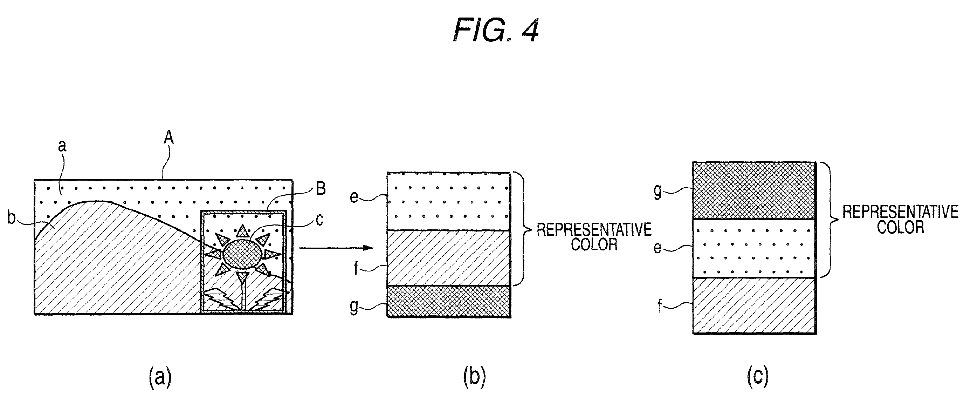

Now assume that an image in a full screen area displayed on the overall monitor to shoot the subject is A. For example, as shown in FIG.4(a), this image A is an image that is composed of a green mountain b against the background of a blue sky a and a red flower c against the background of this mountain b.

As shown in FIG.4(b), a color distribution of the sky a, the mountain b, and the flower c in this full screen area are blue e, green f, and red g from the top. When this image A is input into the attention area analyzing section 12, an attention area B containing a predetermined image pattern is analyzed and extracted herein (step S11). The image in the extracted attention area B is input into the color distribution analyzing section 13. Then, as shown in FIG.4(c), red g, blue e, and green f are given in order of ratios that respective colors occupy in the attention area B, so that the color distribution information in the image in the attention area is classified (step S12).

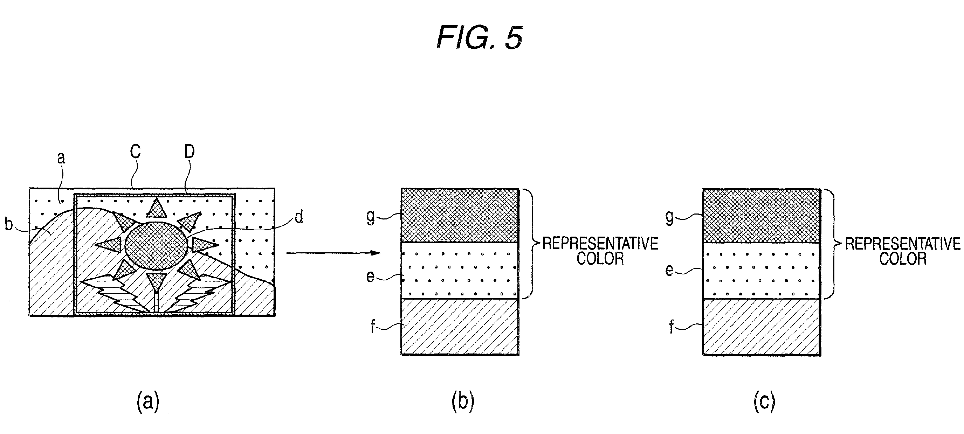

Also, FIG.5(a) shows an image C that is composed of the green mountain b against the background of the blue sky a and a red flower d, which is larger than that shown in FIG.4(a), against the background of this mountain b, and an image area representing the flower d is wider than that in FIG.4(a). Therefore, as shown in FIG.5(b), a color distribution in the full screen area is given by red g, blue e, and green f from the top in order of ratios that respective colors occupy in the full screen area. As a result, the representative colors are different from those in FIG.4(b), and red g, blue e are given as the representative color from the top.

Then, when the image C is input into the attention area analyzing section 12, an attention area D is extracted (step S11). The image in the extracted attention area D is input into the color distribution analyzing section 13 and, as shown in FIG.5(c), the color distribution information containing red g, blue e, and green f from the top in order of ratios that respective colors occupy is given (step S12). Therefore, the representative colors agree with those in FIG.4(c), and the representative colors are selected (step S13). Since difference in the ratios that the images of the flowers d occupy in the attention area seldom occurs between the images A and B, a color distribution of the image in the attention area D is given as shown in FIG.5(c), and as a result the representative colors are equal to those shown in FIG.4(c).

Therefore, when the image of the common subject is picked up in plural different images A, C, the common color distribution can be obtained from plural images A, C by detecting only such subject as the attention areas B, D and calculating the color distributions of the attention areas B, D. Accordingly, luminescent colors of the light emitting diodes described later can be decided based on the representative colors detected from the color distribution.

In other words, when only one attention area is detected, the luminescent pattern previously set to the representative colors is determined following to the decision of the representative colors (step S16). Then, the light emission control section 15 controls a light emission of the light emitting diodes 16 in compliance with this generated luminescent pattern (step S17).

For example, when one attention area is detected, the representative colors in the attention area are turned on for 5 second as the luminescent pattern of the light emitting diodes 16. In contrast, when plural attention areas are detected, the representative colors in respective attention areas are turned on in answer to their areas. Concretely, when the representative colors in respective attention areas are composed of red 50 %, blue 30 %, and green 20 %, the red is turned on for 2.5 second, the blue is turned on for 1.5 second, and the green is turned on for 1.0 second.

### (Second Embodiment)

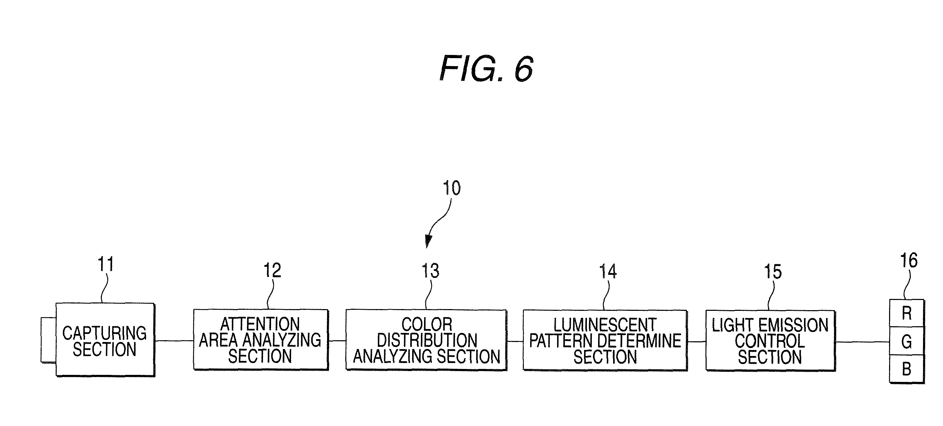

FIG.6 is a block diagram showing a luminescent display device according to a second embodiment of the present invention. In this second embodiment, a luminescent pattern determine section 14 not shown in the first embodiment is provided. The luminescent pattern determine section 14 determines the luminescent pattern of the light emitting diodes 16, and the light emitting diodes 16 emits a light in the predetermined luminescent pattern in representative colors selected by the representative color selecting section.

In this case, as the luminescent pattern of the light emitting diodes 16, (a) the pattern in which a light emitting time of the light emitting diodes 16 is changed in response to an area ratio of representative colors or respective light emitting diodes are caused to emit a light irrespective of the area ratio, (b) the pattern in which the light emitting diodes 16 are turned on of blinked for times in response to an area ratio of representative colors, or the like, (c) the pattern in which a luminescence intensity (brightness) of the light emitting diodes 16 is changed in response to an area ratio of representative colors, or the like, (d) the pattern in which the light emitting diodes 16 are caused to emit a light in order in response to an area ratio of representative colors, or the like or in random order irrespective of the area ratio, (e) the pattern in which the light emitting diodes 16 are caused to emit a light in number in response to an area ratio of representative colors, or the like, and (f) the pattern in which the light emitting diodes 16 are caused to emit a light irrespective of the area ratio generated, i.e., at random are employed.

The light emission control section 15 acts to cause the light emitting diodes 16 to emit a light in any selected luminescent pattern. The luminescent pattern of the light emitting diodes 16 can cause the user of the camera or the cellular phone with camera to perceive intuitively an atmosphere of the image in shooting the subject or in looking at the image, i.e., what kind of image.

As described above, the luminescent pattern is set by a light emitting time, or the like. Therefore, the user can perceive an atmosphere on the image by detecting the lighting or blinking luminescent pattern.

### (Third Embodiment)

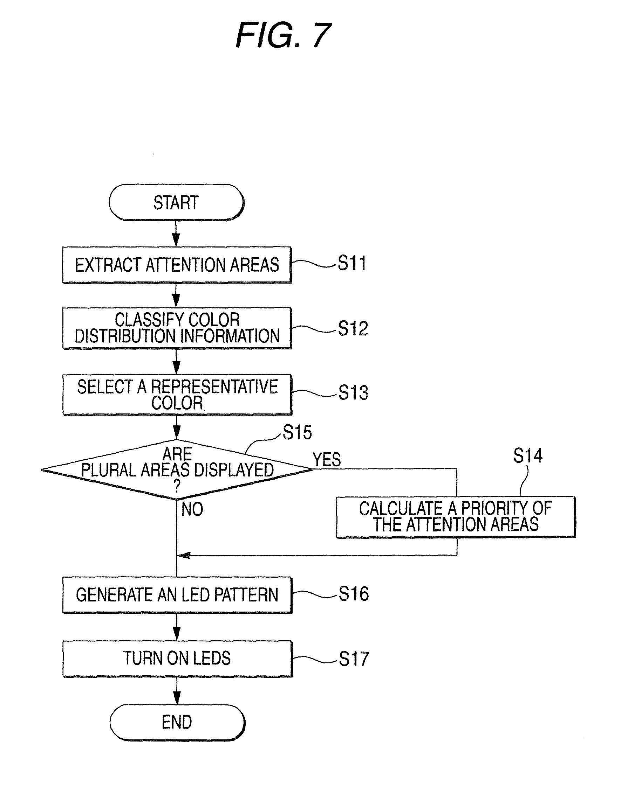

The case where a plurality of areas serving as a candidate of the attention area are present in the image in shooting the subject or in looking at the image of the subject will be explained with reference to a flowchart shown in FIG.7 hereunder. In this case, a priority deciding function is provided to the attention area analyzing section 12, and the priority deciding function calculates a priority (precedence) indicating which area should be extracted preferentially as the attention area (step S14). Therefore, the luminescent pattern determine section 14 generates the luminescent pattern corresponding to the representative color of the attention area with the highest priority (step S16). The light emission control section 15 causes the light emitting diodes 16 to emit a light (step S17). Here, the priority (precedence) calculating method decides the priority in order in response to an area ratio of respective attention areas.

In this case, when one attention area is detected, the luminescent pattern of the light emitting diodes 16 emits a light for 5 second in representative colors of the attention area, for example. In contrast, when plural attention areas are detected, lights are emitted in representative colors of respective attention areas in response to the area ratio. Concretely, when the representative colors in respective attention areas are composed of red 50 %, blue 30 %, and green 20 %, the red is turned on for 2.5 second, the blue is turned on for 1.5 second, and the green is turned on for 1.0 second.

### (Fourth Embodiment)

The color distribution analyzing section 13 has a function of deciding the color distribution based on weighting factors that are set every color information of each pixel in the attention area and then determining the representative colors from this color distribution. In the color distribution analyzing section 13, the weighting factor gives a weight to a color (here, red) that the people seem to pay attention intentionally.

When no weight is given to the color, colors that most often appear in the distribution are specified as the representative colors. For example, red, green, and blue are contained at 30 %, 20 %, and 50 % respectively, the blue is specified as the representative color. At this time, respective numerical values of red, green, and blue are calculated based on the pixel numbers of respective colors to all pixel numbers of the image. Provided all pixel numbers is 100, respective pixel numbers of red, green, and blue are given by 30, 20, and 50.

Next, the case where a weight is given to the color will be explained hereunder. In the present invention, the reason why a weight is given will be given as follows. For example, when some person looks at the image containing red, green, and blue by 30 %, 20 %, and 50 % respectively, the blue is not always perceived as the dominant color, and there is such a possibility that the red is perceived as the color with the highest degree of attention.

In case it is assumed that there is such possibility, for example, the red can be specified as the representative color by setting the numbers of pixels of red, green, and blue to 60, 20, and 50 by multiplying the number of pixels of red by the weighting factor "2" of the color respectively and then generating a distribution chart containing red, green, and blue by 46 %, 15 %, and 38 % respectively from ratios of 60, 20, and 50 to the total virtual pixel number 130 (60+20+50). The weighting factor "2" of the color is applied to only the red herein, but the weighting factor of the color can also be applied to the green and the blue. In this manner, when the human's recognition tendency (degree of attention) to the color is taken into consideration, the control of the luminescent pattern of the light emitting diodes 16 can cause the user to perceive intuitively a feature (atmosphere) of the image.

As described above, according to the luminescent display device according to the embodiment of the present invention, the attention area analyzing section 12 extracts automatically the attention area in shooting the subject or in looking at the image, the representative color is selected from the color distribution of the image in the extracted attention area, and the light emitting diodes 16 are causes to emit a light and displayed in the predetermined luminescent pattern corresponding to the representative color. Therefore, the luminescent pattern can cause the cameraman to perceive intuitively the atmosphere containing the attention area on the image of the subject.

Also, according to the luminescent display device according to the embodiment of the present invention, when plural candidates of the attention area are detected, the user can be caused adequately to perceive intuitively the atmosphere of the image by specifying one attention area, and then determining the luminescent pattern of the light emitting diodes 16 based on the representative color of this specified attention area.

Also, according to the luminescent display device according to the embodiment of the present invention, a degree of people's attention to the color can be added by weighting the color distribution. As a result, the user can be caused to perceive intuitively the feature (atmosphere) of the image by controlling the luminescent pattern of the light emitting diodes 16.

The present invention is explained in detail with reference to the particular embodiments as above. But it is apparent for those skilled in the art that various variations and modifications can be applied without departing from a spirit and a scope of the present invention.

### Industrial Applicability

The luminescent display device of the present invention possesses such an advantage that it is possible for a user to perceive a feature and an atmosphere of an image at a glance from a luminescent pattern of a plurality of light emitting diodes because the light emitting diodes are caused to emit a light in the luminescent pattern responding to a color distribution of the image of the subject in shooting or the picked-up image of the subject, and is available widely for the luminescent display device that causes the light emitting diodes to emit the light in the luminescent pattern in response to the feature of the image in shooting the subject or in looking at the image of the subject.

## Claims

1. A luminescent display device, comprising:
a capturing section which captures an image of a subject;
an attention area analyzing section which extracts an attention area containing a predetermined image pattern from the image captured by the capturing section;
a color distribution calculating section which calculates a color distribution based on color information of respective pixels in the attention area extracted by the attention area analyzing section;
a representative color selecting section which selects a representative color from the color distribution calculated by the color distribution calculating section; and
a light emission control section which controls a light emitting diode to emit a light in the representative color selected by the representative color selecting section.

2. The luminescent display device according to claim 1, further comprising:
a luminescent pattern determine section which determines a luminescent pattern of the light emitting diode;
wherein the light emission control section controls the light emitting diode to emit a light in the representative color selected by the representative color selecting section at a timing that is based upon the luminescent pattern determined by the luminescent pattern determine section.

3. The luminescent display device according to claim 2, wherein the luminescent pattern determine section determines the luminescent pattern in response to the representative color selected by the representative color selecting section.

4. The luminescent display device according to claim 1, wherein, when a plurality of areas as a candidate of the attention area are detected from the image, the attention area analyzing section extracts any one of the plurality of areas as the attention area.

5. The luminescent display device according to claim 1, wherein the color distribution calculating section calculates the color distribution based on a numerical value representing the color information of each pixel in the attention area extracted by the attention area analyzing section and a weighting factor being set every color information.
